(19) Europäisches Patentamt
European Patent Office
Office européen des brevets

(11) **EP 2 720 383 A2**

(12) **EUROPEAN PATENT APPLICATION**
published in accordance with Art. 153(4) EPC

(43) Date of publication:
16.04.2014 Bulletin 2014/16

(51) Int Cl.:
*H04B 5/02* (2006.01)      *H02J 17/00* (2006.01)
*H02J 7/00* (2006.01)

(21) Application number: 12796187.8

(22) Date of filing: 05.06.2012

(86) International application number:
PCT/KR2012/004438

(87) International publication number:
WO 2012/169769 (13.12.2012 Gazette 2012/50)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 07.06.2011 KR 20110054804
04.06.2012 KR 20120059667

(71) Applicant: Samsung Electronics Co., Ltd.
Suwon-si, Gyeonggi-do, 443-742 (KR)

(72) Inventors:
• PARK, Se-Ho
Suwon-si
Gyeonggi-do 443-751 (KR)

• PARK, Sung-Bum
Suwon-si
Gyeonggi-do 443-733 (KR)
• LEE, Young-Min
Yongin-si
Gyeonggi-do 448-120 (KR)

(74) Representative: Birchenough, Lewis
Harrison Goddard Foote LLP
Saviour House
9 St Saviourgate
York YO1 8NQ (GB)

(54) **WIRELESS POWER-TRANSMISSION APPARATUS AND SYSTEM**

(57) According to the present invention, a wireless power-transmission apparatus comprises: a wireless power-transmission unit which wirelessly transmits power to at least one wireless power-receiving unit through a magnetic-resonance coupling system; and a master wireless power-receiving unit which is connected to the wireless power-transmission unit in a wired manner so as to perform communication, and which performs peer-to-peer wireless communication with said at least one wireless power-receiving unit. The frequency of resonance used in the peer-to-peer wireless communication between the master wireless power-receiving unit and said at least one wireless power-receiving unit is the same as the frequency of resonance used in the wireless power transmission between the wireless power-transmission unit and said at least one wireless power-receiving unit.

FIG.5

EP 2 720 383 A2

## Description

[Technical Field]

The present invention relates to wireless power transmission apparatus and system. More particularly, the present invention relates to communication between a wireless power transmitter and a wireless power receiver in a wireless power transmission apparatus and system.

[Background Art]

The development of wireless communication technologies has triggered the advent of ubiquitous information environment in which anyone can exchange all the information they want without the constraints of time and space. Even now, however, for information communication devices, power for their operation mostly depends on a built-in battery, and the battery is recharged by being supplied with power through a wired power cord. Continued use and mobility of the information communication devices are limited because the wired power code or the outlet is needed to recharge the battery. Therefore, wireless information network environment may not guarantee the true freedom unless the power-related problems of the information communication devices are solved.

To solve these problems, many technologies for wirelessly transmitting power have been developed. Among them, the typical technologies may include microwave-based radio wave receiving technology, magnetic field-based magnetic induction technology, and magnetic resonance coupling technology based on energy conversion of magnetic and electric fields.

The radio wave receiving technology may transmit power over long distances by radiating radio waves into the air via an antenna, but it has a limit on power transmission efficiency due to the very large radiation loss occurring in the air. The magnetic induction technology, technology based on magnetic energy coupling by a transmitting primary coil and a receiving secondary coil, has high power transmission efficiency, but for power transmission, the transmitting primary coil and the receiving secondary coil should be adjacent to each other within a short distance of about several mm, the power transmission efficiency may dramatically vary depending on coil alignment between the transmitting primary coil and the receiving secondary coil, and heat generation is severe.

Recently, therefore, the magnetic resonance coupling technology has been developed, which is similar to the magnetic induction technology, but transmits power in the form of magnetic energy by focusing energy on a specific resonant frequency generated by a coil-type inductor L and a capacitor C. The magnetic resonance coupling technology may send relatively large power over distances of several meters, but it requires high resonant efficiency (or high quality value). Therefore, in the magnetic resonance coupling technology, a wireless power transmission system having high resonant efficiency needs to be designed. For the wireless power transmission system, communication technology between a wireless power transmitter and a wireless power receiver is also required to determine start or end of power transmission, or determine the amount of transmission power.

[Disclosure]

[Technical Problem]

An aspect of an exemplary embodiment of the present invention is to provide a wireless power transmission apparatus and system having high resonant efficiency.

Another aspect of an exemplary embodiment of the present invention is to solve inter-communication collision problems between a wireless power transmitter and a plurality of wireless power receivers.

Another aspect of an exemplary embodiment of the present invention is to prevent a wireless power transmitter from suffering from a reduction in voltage or from overcurrent, which may occur as the wireless power transmitter transmits wireless power exceeding its predetermined power transmission capacity.

Another aspect of an exemplary embodiment of the present invention is to prevent a wireless power transmitter from violating international radio interference regulations or disturbing communications of other communication devices, which may be caused by modulating transmission wireless power signals in communication between the wireless power transmitter and a wireless power receiver.

[Technical Solution]

In accordance with one aspect of the present invention, a wireless power transmission apparatus includes a wireless power transmitter for wirelessly transmitting power to at least one wireless power receiver by magnetic resonance coupling; and a master wireless power receiver that is wire-connected to the wireless power transmitter for communication, and performs peer-to-peer wireless communication with the at least one wireless power receiver. A resonant frequency used for the peer-to-peer wireless communication between the master wireless power receiver and the at least one wireless power receiver may be identical to a resonant frequency used for the wireless power transmission between the wireless power transmitter and the at least one wireless power receiver.

The wireless power transmitter may include a power generator for generating and outputting a wireless power signal to wirelessly transmit external power; a transmitting resonator that includes an inductor and a capacitor and transmits the wireless power signal by magnetic resonance coupling to a receiving resonator; and a transmitting controller for controlling the power generator and the transmitting resonator.

The master wireless power receiver may further include a load modulator for performing load modulation communication to perform peer-to-peer wireless communication with the at least one wireless power receiver.

The master wireless power receiver further may include a master receiving resonator for transmitting a modulated communication data signal received the load modulator, to the at least one wireless power receiver by magnetic resonance coupling; and a transmitting controller for controlling the load modulator and the master receiving resonator.

The load modulation communication may be subcarrier modulation communication.

The load modulator may include a load and a switching circuit connected to the load, and perform the subcarrier modulation communication by generating a subcarrier by turning on/off the switching circuit.

The load may be a capacitor.

The subcarrier may have sideband frequencies, one of which is lower than the resonant frequency by a predetermined frequency Wc, and the other of which is higher than the resonant frequency by the predetermined frequency Wc due to the turning on/off of the switching circuit.

A Q value of the master wireless power receiver may be greater than or equal to 10, and less than or equal to 100.

A Q value of the wireless power transmitter may be greater than or equal to 30.

A Q value of the wireless power transmitter may be higher than a Q value of the master wireless power receiver.

In accordance with another aspect of the present invention, a wireless power transmission system includes at least one wireless power transmitter for wirelessly transmitting power to at least one wireless power receiver by magnetic resonance coupling; a master wireless power receiver that is wire-connected to the wireless power transmitter for communication, and performs peer-to-peer wireless communication with the at least one wireless power receiver; and the at least one wireless power receiver for wirelessly receiving power from the wireless power transmitter by magnetic resonance coupling and performing peer-to-peer wireless communication with the master wireless power receiver. A resonant frequency used for the peer-to-peer wireless communication between the master wireless power receiver and the at least one wireless power receiver may be identical to a resonant frequency used for the wireless power transmission between the wireless power transmitter and the at least one wireless power receiver.

The at least one wireless power receiver may include a receiving resonator that includes a capacitor and an inductor, and receives a wireless power signal by magnetic resonance coupling to the wireless power transmitter; a receiving load modulator for performing load modulation communication to perform peer-to-peer wireless communication with the master wireless power receiver; and a power signal converter for maintaining the received wireless power signal at an Alternating Current (AC) signal or converting the received wireless power signal into a Direct Current (DC) signal to charge or supply power to a power consumption device.

[Advantageous Effects]

The wireless power transmission apparatus and system according to the present invention has high resonant efficiency.

In addition, the present invention may prevent inter-communication collision between a wireless power transmitter and a plurality of wireless power receivers.

Furthermore, the present invention may prevent a wireless power transmitter from suffering from a reduction in voltage or from overcurrent, which may occur as the wireless power transmitter transmits wireless power exceeding its predetermined power transmission capacity, when a plurality of wireless power receivers are used to receive wireless power.

Moreover, the present invention may prevent a wireless power transmitter from suffering from a reduction in voltage or from overcurrent, which may occur as the wireless power transmitter transmits wireless power exceeding its predetermined power transmission capacity.

Besides, the present invention may prevent a wireless power transmitter from violating international radio interference regulations or disturbing communications of other communication devices, which may be caused by modulating transmission wireless power signals in communication between the wireless power transmitter and a wireless power receiver.

[Description of Drawings]

FIG. 1 shows an example of a general wireless power transmission system;
FIG. 2 shows another example of the wireless power transmission system;
FIG. 3 shows further another example of the wireless power transmission system;
FIG. 4 shows yet another example of the wireless power transmission system;
FIG. 5 shows a wireless power transmission apparatus according to an embodiment of the present invention;
FIG. 6 shows another example of a wireless power transmission system;
FIG. 7 is a block diagram of a wireless power transmission system according to another embodiment of the present invention;

FIG. 8 is an internal circuit diagram of a transmitting resonator and a receiving resonator;

FIG. 9 is an internal circuit diagram of a master wireless power receiver and a receiving resonator;

FIG. 10 is a graph showing a power spectrum of a wireless power signal in which subcarriers are generated;

FIG. 11A is a graph showing a return loss based on a frequency spectrum of a wireless power transmitter; and

FIG. 11B is a graph showing a return loss based on a frequency spectrum of a master wireless power receiver.

[Best Mode]

The objectives, specific advantages and novel features of the present invention will be more apparatus from the following detailed description taken in conjunction with the accompanying drawings, and preferred embodiments of the present invention. It should be noted that in this specification, the same elements are denoted by the same reference numerals even though they are shown in different drawings. In addition, descriptions of well-known functions and constructions are omitted for clarity and conciseness.

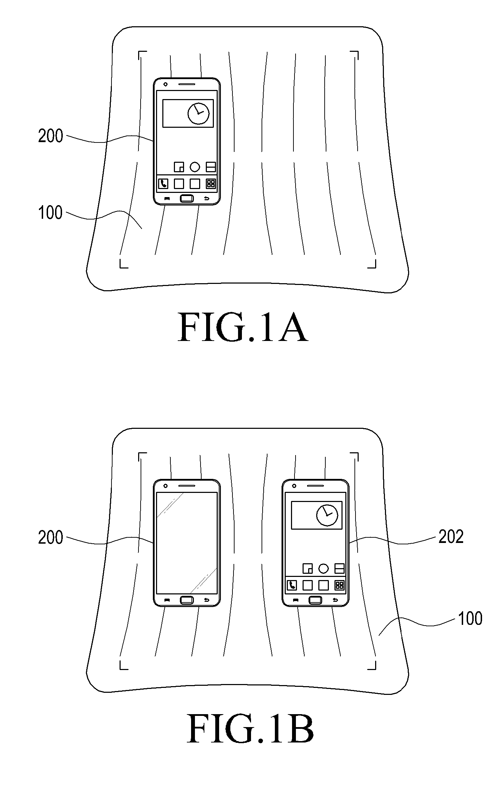

FIGs. 1 show an example of a general wireless power transmission system.

Referring to FIG 1, the wireless power transmission system may include a wireless power transmitter Power_Tx and at least one wireless power receivers Rx1 and Rx2. In other words, power may be wirelessly transmitted from a wireless power transmitter 100 to at least one wireless power receiver 200 (FIG. 1A), and power may be wirelessly transmitted from the wireless power transmitter 100 to a plurality of wireless power receivers 200 and 202 (FIG. 1B). In the example of FIG. 1, the wireless power receivers 200 and 202 are formed in smart phones. Wireless power transmission between the wireless power transmitter 100 and the wireless power receivers 200 and 202 is achieved by magnetic resonance coupling. In other words, wireless power transmitted from the wireless power transmitter 100 by magnetic resonance coupling is received at the wireless power receivers 200 and 202 by magnetic resonance coupling, and the received wireless power may be consumed in smart phones connected to the wireless power receivers 200 and 202, or stored in a battery in the smart phones.

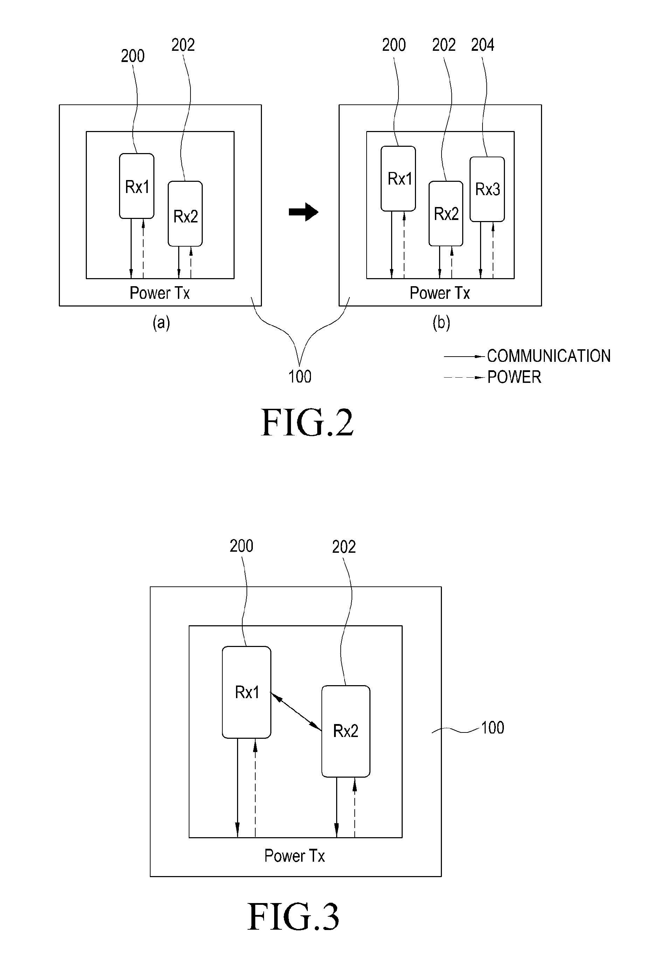

FIGs. 2 shows another example of the wireless power transmission system.

Referring to FIG. 2A, a wireless power transmitter Power_Tx 100 may wirelessly transmit power to a first wireless power receiver Rx1 200 and a second wireless power receiver Rx2 202 (as shown by dashed arrows). The first wireless power receiver Rx1 200 may perform one-way communication with the wireless power transmitter 100, and the second wireless power receiver Rx2 202 may also perform one-way communication with the wireless power transmitter 100 (as shown by solid arrows). The term 'one-way communication' as used herein may refer to communication in which the first and second wireless power receivers 200 and 202 may send a communication request to the wireless power transmitter 100, but the wireless power transmitter 100 may not send a communication request to the first and second wireless power receivers 200 and 202. Therefore, through the one-way communication, the first and second wireless power receivers 200 and 202 may perform communication such as sending a power supply request to the wireless power transmitter 100. However, through the one-way communication, the wireless power transmitter 100 may not perform communication such as sending a charging standby command to the first and second wireless power receivers 200 and 202. However, when the plurality of wireless power receivers 200 and 202 simultaneously perform communication with the wireless power transmitter 100, collision may occur between the communications. For example, assume that the first wireless power receiver 200 is performing communication with the wireless power transmitter 100. In this case, the second wireless power receiver 202 may not determine whether the first wireless power receiver 200 is performing communication with the wireless power transmitter 100, because the second wireless power receiver 202 communicates with the wireless power transmitter 100 on a one-way basis. Therefore, when the second wireless receiver 202 starts communication with the wireless power transmitter 100, collision may occur between the ongoing communication between the first wireless power receiver 200 and the wireless power transmitter 100 and the new communication between the second wireless power receiver 202 and the wireless power transmitter 100.

In the example of FIG. 2B, in addition to the plurality of wireless power receivers 200 and 202, a third wireless power receiver Rx3 204 additionally accesses the wireless power transmitter 100. In this case, the wireless power transmitter 100 may transmit power to the third wireless power receiver Rx3 204 exceeding its predetermined power transmission capacity (overcapacity) since it cannot send a charging standby command to the third wireless power receiver Rx3 204 through communication, thus causing a reduction in voltage of the wireless power transmitter 100 or causing overcharge. This is because in the wireless power transmission system in FIGs. 2A and 2B, the wireless power transmitter 100 cannot send a charging standby command to the third wireless power receiver Rx3 204 requiring excessive charge, through communication, as the first and second wireless power receivers Rx1 200 and Rx2 202 each perform one-way communication with the wireless power transmitter 100.

FIG. 3 shows further another example of the wireless power transmission system.

In the wireless power transmission system in FIG. 3, a wireless power transmitter Power_Tx 100 may wirelessly transmit power to first and second wireless power receivers Rx1 200 and Rx2 202 (as shown by dashed arrows). The first wireless power receiver Rx1 200 may perform one-way communication with the wireless power transmitter 100, and the second wireless power receiver Rx2 202 may also perform one-way communication with the wireless power transmitter 100 (as shown by solid arrows). The first and second wireless power receivers Rx1 200 and Rx2 202 may perform peer-to-peer communication with each other (as shown by a solid arrow). Through the peer-to-peer communication, the first and second wireless power receivers Rx1 200 and Rx2 202 may exchange information with each other.

In the wireless power transmission system in FIG. 3, as the first and second wireless power receivers Rx1 200 and Rx2 202 perform peer-to-peer communication with each other, any one of the first and second wireless power receivers Rx1 200 and Rx2 202 may share the information indicating that it is performing communication with the wireless power transmitter 100, with the other wireless power receiver through the peer-to-peer communication. Therefore, in the wireless power transmission system in FIG. 3, unlike in the wireless power transmission system in FIG. 2, the wireless power transmitter 100 may not suffer from a reduction in voltage or from overcurrent. In other words, inter-communication collision may not occur, which may occur as the plurality of wireless power receivers 200 and 202 simultaneously perform communication with the wireless power transmitter 100. Specifically, when the first wireless power receiver Rx1 200 is performing communication with the wireless power transmitter 100, the second wireless power receiver Rx2 202 may receive the information indicating that the first wireless power receiver Rx1 200 is performing communication with the wireless power transmitter 100, from the first wireless power receiver Rx1 200 through peer-to-peer communication, so the second wireless power receiver Rx2 202 may not attempt to perform communication with the wireless power transmitter 100, thereby preventing inter-communication collision.

However, when the third wireless power receiver Rx3 204 additionally accesses the wireless power transmitter 100 in addition to the first and second wireless power receivers 200 and 202 like in FIG. 2B, the wireless power transmission system in FIG. 3 may also suffer from the same problem as that of the wireless power transmission system in FIG. 2. In other words, similarly, the wireless power transmitter 100 may transmit power to the third wireless power receiver Rx3 204 exceeding its predetermined power transmission capacity (overcapacity) since it cannot send a charging standby command to the third wireless power receiver Rx3 204 through communication, thus causing a reduction in voltage of the wireless power transmitter 100 or causing overcharge. This is because even in the wireless power transmission system in FIG. 3, the wireless power transmitter 100 cannot send a charging standby command to the third wireless power receiver Rx3 204 requiring excessive charge, through communication, as the first and second wireless power receivers Rx1 200 and Rx2 202 each perform one-way communication with the wireless power transmitter 100.

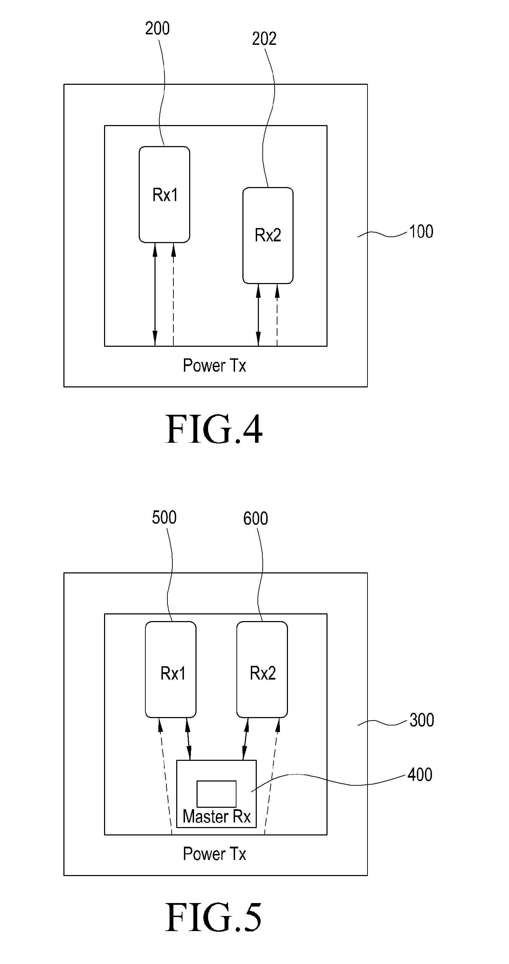

FIG. 4 shows yet another example of the wireless power transmission system.

In the wireless power transmission system in FIG. 4, a wireless power transmitter Power_Tx 100 may wirelessly transmit power to first and second wireless power receivers Rx1 200 and Rx2 202 (as shown by dashed arrows). The first wireless power receiver Rx1 200 may perform two-way communication with the wireless power transmitter 100, and the second wireless power receiver Rx2 202 may also perform two-way communication with the wireless power transmitter 100 (as shown by solid arrows).

Even in the wireless power transmission system in FIG. 4, like in the wireless power transmission system in FIG. 3, inter-communication collision may not occur, which may occur as the wireless power receivers 200 and 202 simultaneously perform communication with the wireless power transmitter 100. This is because the wireless power transmitter 100 may perform two-way communication with each of the wireless power receivers 200 and 202. In other words, when the first wireless power receiver Rx1 200 is performing communication with the wireless power transmitter 100, the second wireless power receiver Rx2 202 may get the information indicating that the first wireless power receiver Rx1 200 is performing communication with the wireless power transmitter 100, through two-way communication with the wireless power transmitter 100. Therefore, the second wireless power receiver Rx2 202 may not attempt to perform communication with the wireless power transmitter 100, thereby preventing inter-communication collision.

Even when the third wireless power receiver Rx3 204 accesses the wireless power transmitter 100 in addition to the plurality of wireless power receivers 200 and 202 like in FIG. 2B, the wireless power transmission system in FIG. 4 may not suffer from the problems that the wireless power transmission systems in FIGs. 2 and 3 have. This is because the wireless power transmitter 100 may send a charging standby command to the third wireless power receiver Rx3 204 through communication as it may perform two-way communication with the third wireless power receiver Rx3 204, thereby preventing the wireless power transmitter 100 from suffering from a reduction in voltage or from overcurrent, which may occur as the wireless power transmitter 100 transmits power exceeding its predetermined power transmission capacity (overcapacity).

However, in the wireless power transmission system in FIG. 4, the wireless power transmitter 100 should directly modulate its transmission wireless power signals in order to perform communication with the wireless power receivers 200 and 202. In this case, the wireless power transmitter 100 may violate international radio interference regulations or disturb communications of other communication devices, as it modulates and transmits high-power wireless power signals.

FIG. 5 shows a wireless power transmission apparatus according to an embodiment of the present invention.

Referring to FIG. 5, a wireless power transmission apparatus according to an embodiment of the present invention includes a wireless power transmitter 300, a master wireless power receiver 400, and at least one wireless power receivers 500 and 600.

The wireless power transmitter 300 wirelessly transmits power to wireless power receivers by magnetic resonance coupling, and is wire-connected to the master wireless power receiver 400 for communication. The wireless power transmitter 300 wirelessly transmits power to the wireless power receivers 500 and 600 by magnetic resonance coupling. In other words, the wireless power transmitted from the wireless power transmitter 300 by magnetic resonance coupling is received at the wireless power receivers 500 and 600 by magnetic resonance coupling, and the received wireless power is supplied to or stored in power consumption devices or load devices connected to the wireless power receivers 500 and 600. Magnetic resonance coupling-based wireless power transmission between the wireless power transmitter 300 and the wireless power receivers 500 and 600 may be achieved as follows. First, the wireless power transmitter 300 generates wireless power signals, and the wireless power signals are converted into magnetic energy by LC resonance based on a transmitting (Tx) resonator including an inductor L and a capacitor C, and then transmitted. Then, the converted magnetic energy is magnetically coupled to a receiving (Rx) resonator including inductors and capacitors in the wireless power receivers 500 and 600, so the wireless power signals are received at the wireless power receiver 500. The magnetic energy coupling may be maximized by making tuning by matching an LC resonant frequency of the Tx resonator with an LC resonant frequency of the Rx resonator. The resonant frequency Wo may be calculated using Equation (1) below.

$$Wo = \frac{1}{\sqrt{LC}} \qquad \cdots \cdots \cdots (1)$$

where L represents an inductance of the Tx resonator or an inductance of the Rx resonator, and C represents a capacitance of the Tx resonator a capacitance of the Rx resonator.

The wireless power transmitter 300 is wire-connected to the master wireless power receiver 400 to perform communication. In other words, the wireless power transmitter 300 may transmit desired communication data signals to the wireless power receivers 500 and 600 by performing wired communication with the wire-connected master wireless power receiver 400, and may receive communication data signals transmitted from the wireless power receivers 500 and 600 by performing wired communication with the master wireless power receiver 400. The communication data signals are data signals including wireless power transmission-related information. In other words, the communication data signals may include, for example, data signals indicating connection or disconnection of the master wireless power receiver 400, data signals indicating start and end of power transmission, and/or data signals indicating a power supply request or a power supply stop request.

Comparing the wireless power transmission apparatus shown in FIG. 5 and corresponding to an embodiment of the present invention with the wireless power transmission system shown in FIG. 4, it can be understood that while the wireless power transmitter 100 directly performs two-way communication with the wireless power receiver 200 in the example of FIG. 4, the wireless power transmitter 300 indirectly performs communication with the wireless power receivers 500 and 600 through wired communication with the master wireless power receiver 400 without performing direct communication with the wireless power receivers 500 and 600 in the embodiment of the present invention shown in FIG. 5. Therefore, the wireless power transmission apparatus shown in FIG. 5 and corresponding to an embodiment of the present invention does not need to modulate high-power wireless power signals transmitted from the wireless power transmitter 300 for communication. Thus, the wireless power transmission apparatus shown in FIG. 5 and corresponding to an embodiment of the present invention, unlike that shown in FIG. 4, may not violate international radio interference regulations or disturb communications of other communication devices.

The master wireless power receiver 400 is wire-connected to the wireless power transmitter 300 to perform communication, and performs peer-to-peer wireless communication with the wireless power receivers 500 and 600, and the peer-to-peer wireless communication refers to performing communication with the wireless power receivers 500 and 600 using the same resonant frequency as the resonant frequency used for the wireless power transmission. In other words, by being wire-connected to the wireless power transmitter 300 to perform communication, the master wireless power receiver 400 may transmit the communication data signals transmitted from the wireless power receivers 500 and 600 to the wireless power transmitter 300, and transmit the communication data signals transmitted from the wireless power transmitter 300 to the wireless power receivers 500 and 600. The master wireless power receiver 400 may directly transmit and receive the communication data signals by performing peer-to-peer wireless communication with the wireless power receivers 500 and 600. To perform peer-to-peer wireless communication with the wireless power receivers 500 and 600, the master wireless power receiver 400 may perform communication with the wireless power receivers 500 and 600 using the same resonant frequency as the resonant frequency used for the wireless power transmission. In other words, the master wireless power receiver 400 includes an inductor and a capacitor, and may perform peer-to-peer wireless communication with the wireless power receivers 500 and 600 using the resonant frequency that is used when wireless power is transmitted from the wireless power transmitter 300 to the wireless power receivers 500 and 600. Therefore, the master wireless power receiver 400 modulates signals whose power is less than that of the wireless power signals transmitted from the wireless power transmitter 300 because it performs peer-to-peer communication with the wireless power receivers 500 and 600, thereby preventing the problems that the wireless power transmission system shown in FIG. 4 violates international radio interference regulations or disturbs communications of other communication devices as it modulates high-power wireless power signals.

The wireless power transmission apparatus shown in FIG. 5 and corresponding to an embodiment of the present invention may not suffer from inter-communication collision which is the problems of the wireless power transmission system in FIG. 2. In other words, the wireless power transmission apparatus may prevent inter-communication collision which may occur as the wireless power receivers 500 and 600 simultaneously perform communication with the wireless power transmitter 300. This is because the wireless power transmitter 300 may perform peer-to-peer wireless communication with each of the wireless power receivers 500 and 600 through the wire-connected master wireless power receiver 400. For example, when the first wireless power receiver Rx1 500 is performing communication with the wireless power transmitter 300 through the master wireless power receiver 400, the second wireless power receiver Rx2 600 may get the information indicating that first wireless power receiver Rx1 500 is performing communication with the wireless power transmitter 300, through the master wireless power receiver 400. Then, the second wireless power receiver Rx2 600 may not attempt to perform communication with the wireless power transmitter 300, preventing inter-communication collision.

Even when the third wireless power receiver Rx3 204 additionally accesses the wireless power transmitter 100 in addition to the plurality of wireless power receivers 200 and 202 like in FIG. 2B, the wireless power transmission apparatus in FIG. 5 may not suffer from the problems that the wireless power transmission systems in FIGs. 2 and 3 have. This is because the wireless power transmitter 300 in FIG. 5 may send a charging standby command to the third wireless power receiver Rx3 through communication because it may perform peer-to-peer wireless communication with the third wireless power receiver Rx3 through the wire-connected master wireless power receiver 400, thereby preventing the wireless power transmitter 300 from suffering from a reduction in voltage or from overcurrent, which may occur as the wireless power transmitter 300 transmits power exceeding its predetermined power transmission capacity (overcapacity).

The wireless power transmission apparatus according to another embodiment of the present invention may further include at least one wireless power receiver 500 in addition to the wireless power transmitter 300 and the master wireless power receiver 400.

The wireless power receiver 500 wirelessly receives power from the wireless power transmitter 300 by magnetic resonance coupling, and performs peer-to-peer wireless communication with the master wireless power receiver 400. First, wireless power signals generated in the wireless power transmitter 300 are converted into magnetic energy by LC resonance in a Tx resonator including an inductor L and a capacitor C. Thereafter, the converted magnetic energy is magnetically coupled to an Rx resonator including an inductor and a capacitor in the wireless power receiver 500, so the wireless power signals are transmitted to the wireless power receivers 500 and 600. The magnetic energy coupling may be maximized by making tuning by matching an LC resonant frequency of the Tx resonator with an LC resonant frequency of the Rx resonator. The wireless power receivers 500 and 600 perform peer-to-peer wireless communication with the master wireless power receiver 400, and the peer-to-peer wireless communication refers to performing communication with the master wireless power receiver 400 using the same resonant frequency as the resonant frequency used for the wireless power transmission.

The wireless power receivers 500 and 600 may directly transmit and receive the communication data signals by performing peer-to-peer wireless communication with the master wireless power receiver 400. To perform peer-to-peer wireless communication with the master wireless power receiver 400, the wireless power receivers 500 and 600 may perform communication with the master wireless power receiver 400 using the same resonant frequency as the resonant frequency used for the wireless power transmission. In other words, the wireless power receivers 500 and 600 include an inductor and a capacitor, and may perform peer-to-peer wireless communication with the master wireless power receiver 400 using the resonant frequency that is used when wireless power is transmitted from the wireless power transmitter 300 to the wireless power receivers 500 and 600.

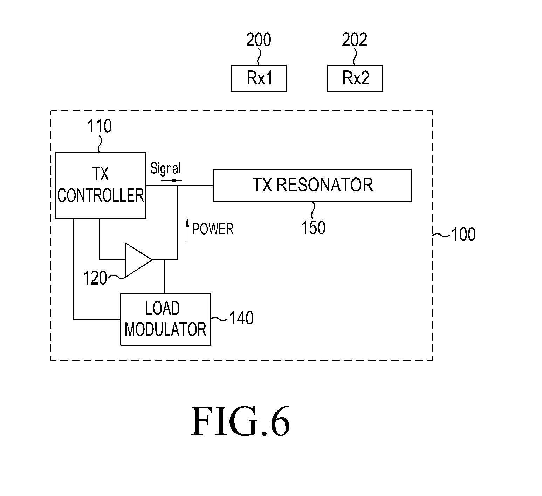

FIG. 6 shows another example of a wireless power transmission system.

Comparing a wireless power transmission apparatus shown in FIG. 6 and corresponding to an embodiment of the present invention, with the wireless power transmission apparatus shown in FIG. 5, it can be understood that the wireless power transmission apparatus shown in FIG. 6 and corresponding to an embodiment of the present invention further includes the master wireless power receiver 400 in the wireless power transmitter 300. In other words, the wireless power transmission apparatus according to another embodiment of the present invention includes the master wireless power receiver 400 that is wire-connected to the wireless power transmitter 300 for communication, and performs peer-to-peer wireless communication with the wireless power receiver 500.

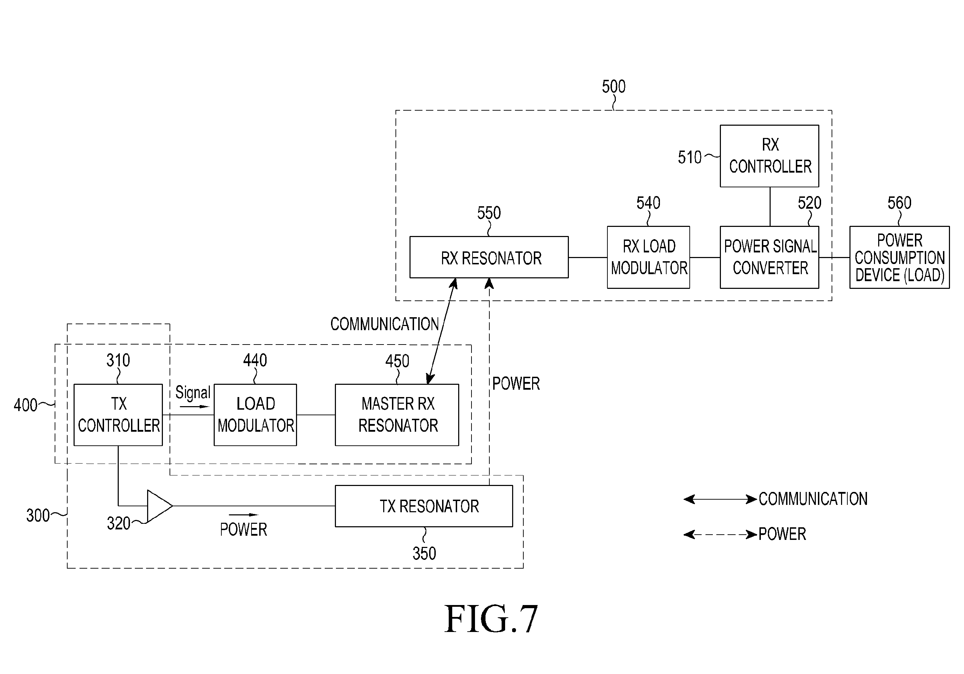

FIG. 7 is a block diagram of a wireless power transmission system according to another embodiment of the present invention.

Referring to FIG. 7, the wireless power transmission apparatus according to another embodiment of the present invention includes a wireless power transmitter 300 and a master wireless power receiver 400. The wireless power transmitter 300 includes a Tx controller 310, a power generator 320, and a Tx resonator 350. The master wireless power receiver 400 includes the Tx controller 310, a load modulator 440, and a master Rx resonator 450.

The wireless power transmission apparatus according to another embodiment of the present invention will be described below with reference to FIG. 7.

The wireless power transmitter 300 includes the Tx controller 310, the power generator 320, and the Tx resonator 350.

To wirelessly transmit external power, the power generator 320 generates and outputs a wireless power signal. In other words, the power generator 320 may receive external power and generate and output a wireless power signal needed for wireless power transmission. When an AC signal corresponding to external power has a signal format inappropriate for wireless power transmission, the power generator 320 may convert the external power into an AC signal appropriate for wireless transmission. To increase the efficiency of wireless power transmission, the power generator 320 may amplify the generated wireless power signal.

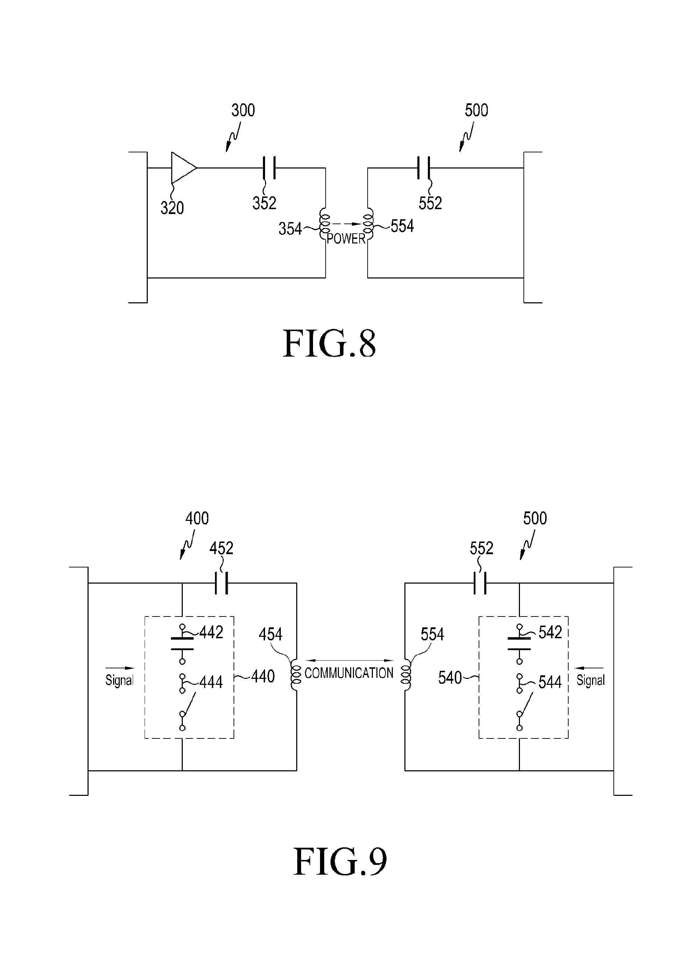

The Tx resonator 350 includes a capacitor C and an inductor L, and transmits the wireless power signal by magnetic resonance coupling to an Rx resonator 550. The magnetic resonance coupling refers to matching an LC resonant frequency of the Tx resonator 350 with an LC resonant frequency of the Rx resonator 550 to maximize magnetic energy coupling by making tuning. The term 'tuning' as used herein may refer to generating resonance at a specific frequency by changing an inductance of an inductor L and a capacitance of a capacitor C in a resonance circuit. The wireless power transmitted from the Tx resonator 350 by magnetic resonance coupling is received at the Rx resonator 550 included in the wireless power receiver 500 by magnetic resonance coupling, and the received wireless power is supplied to or stored in a power consumption device 560 connected to the wireless power receiver 500. FIG. 8 shows an example of internal circuits of a Tx resonator 350 and an Rx resonator 550. A wireless power transmission process between the Tx resonator 350 and the Rx resonator 550 by magnetic resonance coupling will be described in detail with reference to FIGs. 8 and 7. First, the power generator 320 included in the wireless power transmitter 300 generates a wireless power signal, and the wireless power signal is converted into magnetic energy by LC resonance in the Tx resonator 350 including an inductor L 354 and a capacitor C 352. Thereafter, the converted magnetic energy is magnetically coupled to an inductor L 554 and a capacitor C 552 of the Rx resonator 550 included in the wireless power receiver 500. The wireless power signal is transmitted to the wireless power receiver 500 by the magnetic coupling. The magnetic energy coupling may be maximized by making tuning by matching an LC resonant frequency of the Tx resonator 350 with an LC resonant frequency of the Rx resonator 550.

The Tx controller 310 controls the wireless power transmitter 300 overall. In other words, by controlling the power generator 320, the Tx controller 310 generates a wireless power signal to wirelessly transmit external power. The Tx controller 310 controls an impedance matcher 330 to achieve impedance matching between the Tx resonator 350 and the power generator 320. The Tx controller 310 controls the Tx resonator 350 so that the Tx resonator 350 including a capacitor C and an inductor L may transmit the wireless power signal by magnetic resonance coupling to the Rx resonator 550.

The master wireless power receiver 400 includes the Tx controller 310, the load modulator 440, and the master Rx resonator 450. The master wireless power receiver 400 is wire-connected to the wireless power transmitter 300 for communication. FIG. 9 is an internal circuit diagram of the master wireless power receiver 400 and the Rx resonator 550. The master wireless power receiver 400 will be described below with reference to FIGs. 9 and 7.

The load modulator 440 performs load modulation communication to perform peer-to-peer wireless communication with the wireless power receiver 500. In other words, the load modulator 440 generates a communication data signal modulated by multiplying a desired communication data signal by a carrier having a predetermined frequency band, and repeatedly transmits the modulated communication data signal to the wireless power receiver 500. The load modulator 440 may include a load such as a capacitor 442, and may include a switching circuit 444 connected to the capacitor 442. The communication data signal may have a value such as "10110" through turning on/off of the switching circuit 444. The switching circuit 444 may be turned on for the communication data signal of "1", and turned off for the communication data signal of "0". The switching of the switching circuit 444 in the load modulator 440 may be performed under control of the Tx controller 310.

The master Rx resonator 450 transmits the modulated communication data signal received from the load modulator 440 to the wireless power receiver 500 by magnetic resonance coupling. The master Rx resonator 450 may include an inductor L 454 and a capacitor C 452. The modulated communication data signal is converted into magnetic energy by LC resonance by the inductor L 454 and the capacitor C 452 included in the master Rx resonator 450. Thereafter, the converted magnetic energy is magnetically coupled to the inductor L 554 and the capacitor C 552 of the Rx resonator 550 included in the wireless power receiver 500. The modulated communication data signal is transmitted to the wireless power receiver 500 by the magnetic coupling. The master Rx resonator 450 may receive a communication data signal from the wireless power receiver 500. Even during reception, the master Rx resonator 450 receives a communication data signal by magnetic resonance coupling to the Rx resonator 550.

The Tx controller 310 controls the master wireless power receiver 400 overall. The Tx controller 310 controls the master wireless power receiver 400 to perform peer-to-peer wireless communication with the wireless power receiver 500. The peer-to-peer wireless communication is controlled to perform communication with the wireless power receiver 500 using the same resonant frequency as the resonant frequency used for the wireless power transmission. By controlling the load modulator 440, the Tx controller 310 generates a communication data signal modulated by multiplying a desired communication data signal by a carrier having a predetermined frequency band, and repeatedly transmits the modulated communication data signal to the wireless power receiver 500. The Tx controller 310 controls the master Rx resonator 450 to transmit the modulated communication data signal received from the load modulator 440 to the wireless power receiver 500 by magnetic resonance coupling.

The Tx controller 310 may control the wireless power transmitter 300 that includes the power generator 320, the impedance matcher 330, and the Tx resonator 350, and may also control the master wireless power receiver 400 that includes the load modulator 440 and the master Rx resonator 450. The Tx controller 310 may separately include a first Tx controller (not shown) for controlling the wireless power transmitter 300 that includes the power generator 320, the impedance matcher 330, and the Tx resonator 350, and a second Tx controller (not shown) for controlling the master wireless power receiver 400 that includes the load modulator 440 and the master Rx resonator 450.

Referring to FIGs. 7 to 9, the wireless power transmission system according to another embodiment of the present invention may further include at least one wireless power receiver 500.

The wireless power receiver 500 may include an Rx controller 510, a power signal converter 520, an Rx load modulator 540, and the Rx resonator 550.

The Rx resonator 550 includes a capacitor 552 and an inductor 554, and receives a wireless power signal by magnetic resonance coupling to the Tx resonator 350. The Rx resonator 550 may perform communication with the master wireless power receiver 400 by magnetic resonance coupling to the master Rx resonator 450.

The Rx load modulator 540 performs load modulation communication to perform peer-to-peer wireless communication with the master wireless power receiver 400. In other words, the Rx load modulator 540 generates a communication data signal modulated by multiplying a desired communication data signal by a carrier having a predetermined frequency band, and repeatedly transmits the modulated communication data signal to the master wireless power receiver 400. The Rx load modulator 540 may include a load such as a capacitor 542, and may include a switching circuit 544 (shown in FIG. 9) connected to the capacitor 542. The communication data signal may have a value such as "10110" through turning on/off of the switching circuit 544. The switching of the switching circuit 544 in the Rx load modulator 540 may be performed under control of the Rx controller 510.

The power signal converter 520 maintains a received wireless power signal at an AC signal or converts it into a DC signal to charge or supply proper power to the power consumption device 560. In other words, the power signal converter 520 may include an AC-AC coverer (not shown) for maintaining a received wireless power signal at a proper AC signal, and/or an AC-DC converter (not shown) for converting a received wireless power signal into a proper DC signal.

The power consumption device 560 receives and consumes the wireless power signal that the wireless power receiver 500 has received. The power consumption device 560 may be any one of various electronic devices such as smart phones, tablet PCs, MP3 players, handheld televisions, notebook computers, and battery chargers. Therefore, the wireless power receiver 500 may be formed in the power consumption device 560.

The Rx controller 510 controls the wireless power receiver 500 overall. By controlling the Rx resonator 550, the Rx controller 510 receives a wireless power signal by magnetic resonance coupling to the Tx resonator 350, and performs communication with the master wireless power receiver 400 by magnetic resonance coupling to the master Rx resonator 450. By controlling the Rx load modulator 540, the Rx controller 510 performs load modulation communication to perform peer-to-peer wireless communication with the master wireless power receiver 400. By controlling the power signal converter 520, the Rx controller 510 maintains a received wireless power signal at an AC signal or converts it into a DC signal to charge or supply proper power to the power consumption device 560.

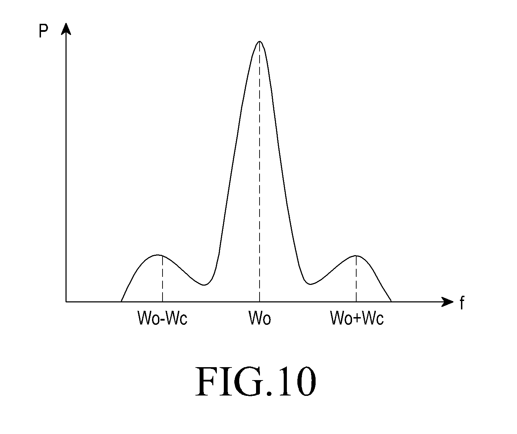

In the wireless power transmission apparatus according to further another embodiment of the present invention, the load modulation communication is a subcarrier modulation communication. The term 'subcarrier modulation communication' as used herein may refer to a method for generating subcarriers using a load modulator and performing communication with the subcarriers. The load modulator may include a load and a switching circuit, and may generate subcarriers by turning on/off the switching circuit connected to the load. The load modulator will be described in detail. Referring to FIG. 9, the master wireless power receiver 400 may include the load modulator 440, and the capacitor 452 and the inductor 454 included in the master Rx resonator 450. The load modulator 440 may include a load and a switching circuit. The load may be a capacitor 442, and the capacitor 442 may be serially connected to the switching circuit 444. The load modulator 440 may be connected in parallel to the capacitor 452 and the inductor 454 included in the master Rx resonator 450. Communication may be performed by converting information about a communication data signal into a code (having a value such as '100110') through turning on/off of the switching circuit 444 connected to a load (e.g., the capacitor 442) of the load modulator 440. The subcarrier generated using the load modulator 440 has sideband frequencies through turning on/off of the switching circuit connected to the load. The term 'sideband frequencies' as used herein may refer to frequencies Wo-Wc and Wo+Wc which are greater and less by a predetermined frequency Wc than a resonant frequency Wo (see Equation (1)) between the Tx resonator 350 and the Rx resonator 550, at which the wireless power signal is transmitted (see FIG. 10). FIG. 10 is a graph showing a power spectrum of a wireless power signal in which subcarriers are generated. The X-axis of FIG. 10 represents a frequency f, and the Y-axis represents power P. Wo represents a resonant frequency between the Tx resonator 350 and the Rx resonator 550, at which the wireless power signal is transmitted, and Wo-Wc and Wo+Wc represent sideband frequencies occurring due to the generation of the subcarrier. Therefore, if a subcarrier having the sideband frequencies is transmitted, the Rx controller 510 of the wireless power receiver 500 that has received the subcarrier may receive a communication data signal by detecting the subcarrier having the sideband frequencies using a filter.

In the wireless power transmission apparatus according to further another embodiment of the present invention, a Q value of the master wireless power receiver is greater than or equal to 10, and less than or equal to 100.

In the wireless power transmission apparatus according to yet another embodiment of the present invention, a Q value of the master wireless power receiver 400 is greater than or equal to 10, and less than or equal to 100, and the master wireless power receiver 400 has characteristics appropriate for subcarrier modulation communication. The Q value is a value representing characteristics of magnetic resonance coupling, and the higher the Q value, the higher the efficiency of wireless power transmission. The Q value may be represented by Equation (2) below.

$$Q = \frac{Wo \times L}{R} \qquad \dots \dots \dots (2)$$

where Wo represents a resonant frequency (see Equation (1)), L represents an inductance, and R represents a radiation loss component.

Otherwise, the Q value may be represented by Equation (3) below.

$$Q = \frac{Wo}{\Delta W_{3dB}} \qquad \dots \dots \dots (3)$$

where Wo represents a resonant frequency (see Equation (1)), and $\Delta W_{3dB}$ represents 3dB bandwidth. The 3dB bandwidth refers to a bandwidth between points where power is lower by 3dB than the power of the resonant frequency having the maximum power.

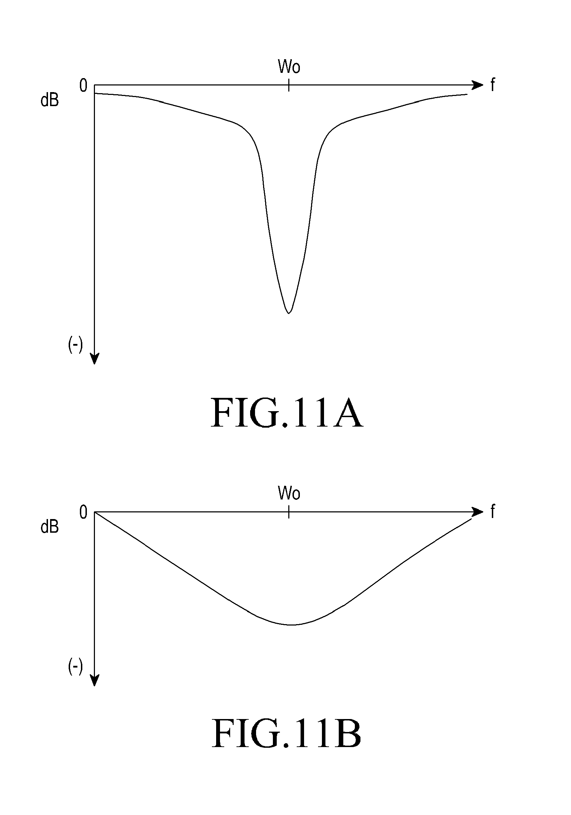

The load modulation communication of the master wireless power receiver 400 may be subcarrier modulation communication. As described with reference to FIG. 10, frequencies of the subcarrier are represented as Wo-Wc and Wo+Wc. However, if a Q value of the master wireless power receiver 400 is high, $\Delta$W3db representing 3dB bandwidth is narrow (see Equation (3)), so frequencies Wo-Wc and Wo+Wc of the subcarrier may not occur. Therefore, in the wireless power transmission apparatus according to yet another embodiment of the present invention, a Q value of the master wireless power receiver 400 is greater than or equal to 10, and less than or equal to 100, and $\Delta$ W3db representing 3dB Bandwidth is set to be properly wide so that frequencies Wo-Wc and Wo+Wc of the subcarrier may occur. FIG. 11B is a graph showing a return loss based on a frequency spectrum of the master wireless power receiver 400. In FIG. 11B, the X-axis represents a frequency f, and the Y-axis represents a return loss. FIG. 11A is a graph showing a return loss based on a frequency spectrum of a wireless power transmitter. Comparing the wireless power transmitter 300 with the master wireless power receiver 400 in FIG. 11B, it can be understood that the master wireless power receiver 400 is lower in return loss than the wireless power transmitter 300 over a wide band. In other words, the return loss may be set low over a wide band by appropriately broadening $\Delta$ W3db representing 3dB bandwidth by decreasing a Q value of the master wireless power receiver 400. Therefore, the wireless power transmission apparatus according to yet another embodiment of the present invention sets a low Q value of the master wireless power receiver 400 so that frequencies Wo-Wc and Wo+Wc of the subcarrier may appear in the frequency spectrum of the master wireless power receiver 400. Preferably, therefore, the Q value is set to 100 or less because when the Q value is set to 100 or higher, frequencies Wo-Wc and Wo+Wc of the subcarrier may not appear in the frequency spectrum of the master wireless power receiver 400.

In the wireless power transmission apparatus according to yet another embodiment of the present invention, a Q value of the wireless power transmitter 300 is set to 30 or higher.

The wireless power transmitter 300 transmits only wireless power without performing communication, so it does not need to decrease its Q value like the master wireless power receiver. Instead, the wireless power transmitter 300 needs to increase its Q value to increase the efficiency of wireless power transmission. Therefore, in the wireless power transmission apparatus according to yet another embodiment of the present invention, a Q value of the wireless power transmitter 300 is set to 30 or higher, making it possible to increase the efficiency of wireless power transmission. This is because when a Q value of the wireless power transmitter 300 is set to 30 or less, the transmission efficiency is too low, decreasing the feasibility of power transmission. FIG. 11A is a graph showing a return loss based on a frequency spectrum of a wireless power transmitter. Comparing the graph in FIG. 11A for the wireless power transmitter 300 with the graph in FIG. 11B for the master wireless power receiver 400, it is noted that a return loss of the wireless power transmitter 300 is very low at the resonant frequency Wo as the wireless power transmitter 300 has a high Q value, ensuring high efficiency of wireless power transmission, and frequencies Wo-Wc and Wo+Wc of the subcarrier do not appear in the frequency spectrum of the wireless power transmitter 300 as ∆W3db representing 3dB bandwidth is narrow. Therefore, the wireless power transmitter 300 shows the high efficiency of wireless power transmission as it has a high Q value, and the frequencies Wo-Wc and Wo+Wc of the subcarrier do not appear in the frequency spectrum of the wireless power transmitter 300 as ∆W3db representing 3dB bandwidth is narrow. So, the wireless power transmitter 300 may not suffer from interference while communicating with the master wireless power receiver 400. In addition, a Q value of the wireless power transmitter may be set to be higher than a Q value of the master wireless power receiver to prevent the interference from occurring between communications. Therefore, a Q value of the wireless power transmitter may be set to 100 or higher.

While the invention has been shown and described with reference to certain exemplary embodiments thereof, it will be understood by those skilled in the art that various changes in form and details may be made therein without departing from the spirit and scope of the invention as defined by the appended claims and their equivalents.

**Claims**

1. A wireless power transmission apparatus comprising:

   a wireless power transmitter for wirelessly transmitting power to at least one wireless power receiver by magnetic resonance coupling; and
   a master wireless power receiver that is wire-connected to the wireless power transmitter for communication, and performs peer-to-peer wireless communication with the at least one wireless power receiver;
   wherein a resonant frequency used for the peer-to-peer wireless communication between the master wireless power receiver and the at least one wireless power receiver is identical to a resonant frequency used for the wireless power transmission between the wireless power transmitter and the at least one wireless power receiver.

2. The wireless power transmission apparatus of claim 1, wherein the wireless power transmitter includes:

   a power generator for generating and outputting a wireless power signal to wirelessly transmit external power;
   a transmitting resonator that includes an inductor and a capacitor and transmits the wireless power signal by magnetic resonance coupling to a receiving resonator; and
   a transmitting controller for controlling the power generator and the transmitting resonator.

3. The wireless power transmission apparatus of claim 1, wherein the master wireless power receiver further includes a load modulator for performing load modulation communication to perform peer-to-peer wireless communication with the at least one wireless power receiver.

4. The wireless power transmission apparatus of claim 3, wherein the master wireless power receiver further includes:

   a master receiving resonator for transmitting a modulated communication data signal received the load modulator, to the at least one wireless power receiver by magnetic resonance coupling; and
   a transmitting controller for controlling the load modulator and the master receiving resonator.

5. The wireless power transmission apparatus of claim 3, wherein the load modulation communication is subcarrier modulation communication.

6. The wireless power transmission apparatus of claim 5, wherein the load modulator includes a load and a switching circuit connected to the load, and performs the subcarrier modulation communication by generating a subcarrier by turning on/off the switching circuit.

7. The wireless power transmission apparatus of claim 6, wherein the load is a capacitor.

8. The wireless power transmission apparatus of claim 6, wherein the subcarrier has sideband frequencies, one of which is lower than the resonant frequency by a predetermined frequency Wc, and the other of which is higher than the resonant frequency by the predetermined frequency Wc due to the turning on/off of the switching circuit.

9. The wireless power transmission apparatus of claim 1, wherein a Q value of the master wireless power receiver is greater than or equal to 10, and less than or equal to 100.

10. The wireless power transmission apparatus of claim 1, wherein a Q value of the wireless power transmitter is greater than or equal to 30.

11. The wireless power transmission apparatus of claim 1, wherein a Q value of the wireless power transmitter is higher than a Q value of the master wireless power receiver.

12. A wireless power transmission system comprising:

    at least one wireless power transmitter for wirelessly transmitting power to at least one wireless power receiver by magnetic resonance coupling;

    a master wireless power receiver that is wire-connected to the wireless power transmitter for communication, and performs peer-to-peer wireless communication with the at least one wireless power receiver; and

    the at least one wireless power receiver for wirelessly receiving power from the wireless power transmitter by magnetic resonance coupling and performing peer-to-peer wireless communication with the master wireless power receiver;

    wherein a resonant frequency used for the peer-to-peer wireless communication between the master wireless power receiver and the at least one wireless power receiver is identical to a resonant frequency used for the wireless power transmission between the wireless power transmitter and the at least one wireless power receiver.

13. The wireless power transmission system of claim 12, wherein the at least one wireless power receiver includes:

    a receiving resonator that includes a capacitor and an inductor, and receives a wireless power signal by magnetic resonance coupling to the wireless power transmitter;

    a receiving load modulator for performing load modulation communication to perform peer-to-peer wireless communication with the master wireless power receiver; and

    a power signal converter for maintaining the received wireless power signal at an Alternating Current (AC) signal or converting the received wireless power signal into a Direct Current (DC) signal to charge or supply power to a power consumption device.

200

100

FIG.1A

200

202

100

FIG.1B

COMMUNICATION
POWER

FIG.2

FIG.3

FIG.4

FIG.5

FIG.6

EP 2 720 383 A2

FIG.7

300

320    352
354
POWER    554
552    500

FIG.8

400    452
442    454
444    440
Signal    COMMUNICATION    554    540    542    552    500
544    Signal

FIG.9

FIG.10

FIG.11A

FIG.11B